**Europäisches Patentamt**

**European Patent Office**

**Office européen des brevets**

(19)

(11) Veröffentlichungsnummer: **0 055 688**

**A1**

(12) ## EUROPÄISCHE PATENTANMELDUNG

(21) Anmeldenummer: **81730107.0**

(51) Int. Cl.³: **G 08 C 15/12**

(22) Anmeldetag: **15.10.81**

(30) Priorität: **23.12.80 DE 3049402**

(43) Veröffentlichungstag der Anmeldung:
**07.07.82 Patentblatt 82/27**

(84) Benannte Vertragsstaaten: ..  ...
**BE GB**

(71) Anmelder: **SIEMENS AKTIENGESELLSCHAFT Berlin
und München
Postfach 22 02 61
D-8000 München 22(DE)**

(72) Erfinder: **Baumgärtl, Ulrich, Ing. grad.
Gartenfelder Strasse 58
D-1000 Berlin 20(DE)**

(54) **Anordnung zur Signalübertragung nach dem Zeitmultiplex-System.**

(57) Eine nach dem Zeitmultiplex-System arbeitende Anordnung zur Signalübertragung umfaßt eine Anzahl von Stationen, die jeweils einen Taktgenerator (27, 33) sowie einen hierdurch gesteuerten Adressenzähler (30, 34) aufweisen. Der Taktgenerator einer Hauptstation (1) setzt die Taktgeneratoren der Nebenstationen in Lauf und synchronisiert diese. Im übrigen arbeiten die Taktgeneratoren autonom, z. B. durch Ausstattung mit Steuerquarzen. Dadurch ist ein synchrones Datenübertragungssystem geschaffen, das mit Rechtecksignalen rein digital arbeitet und von der Dämpfung der Übertragungsleitung zwischen den Stationen unabhängig ist. Als Übertragungsleitung eignet sich daher insbesondere ein optisches Kabel, d.h. Lichtleiter auf der Basis biegsamer Glasfasern.

*FIG.2*

SIEMENS AKTIENGESELLSCHAFT          Unser Zeichen
Berlin und München                  VPA 80 P 3803 DE

Anordnung zur Signalübertragung nach dem Zeitmultiplex-System
_____

Die Erfindung betrifft eine Anordnung zur Signalübertragung nach dem Zeitmultiplex-System mit einer Anzahl
von Signalgeber und Signalempfänger enthaltenden Stationen, die miteinander in Signalaustausch treten können.

Eine Anordnung dieser Art ist durch die DE-OS 28 01 209
bekannt geworden. Zur Meßdaten- oder Befehlsübertragung
werden dabei Signalfolgen ausgesandt, die jeweils aus
einer Kommandophase und einer Meßdaten-Übertragungsphase
bestehen. Während der Kommandophase der Signalfolge
werden Adressen und Einstellinformationen von dem Sendeteil auf die Meßstellen übertragen, und anschließend
werden nacheinander die Meßdaten von den einzelnen Meßstellen an den Empfangsteil übertragen. Als periodische
Signale dienen dabei Sinusschwingungen, deren Amplitude
durch Dämpfungsglieder entsprechend den von der Meßstelle
erfaßten Meßdaten veränderbar sind.

Damit in den Meßstellen enthaltene Zähler ordnungsgemäß
arbeiten können, müssen alle Sinusschwingungen der Signalfolge sicher übertragen werden, d. h.,es darf nicht durch
zu starke Dämpfung eine Unterbrechung der Signalfolge
eintreten. Der Erfindung liegt in diesem Zusammenhang
die Aufgabe zugrunde, eine sichere Signalübertragung
auch bei auftretenden Lücken sicherzustellen und eine
Abhängigkeit von der Dämpfung zu vermeiden.

Gemäß der Erfindung wird diese Aufgabe dadurch gelöst,
daß die Stationen einen Adressenzähler sowie einen diesen steuernden Taktgenerator besitzen, wobei die Takt-

Et 3 Sho / 19.12.1980

generatoren von Nebenstationen durch den Taktgenerator
einer Hauptstation in Lauf setzbar und synchronisierbar
sind. Durch die jeder Station zugeordneten Taktgeneratoren wird die gesamte Anordnung unabhängig von eventuell
in den Signalfolgen auftretenden Lücken, weil jede Station aufgrund einer autonomen Steuerung aus einer Signalfolge die für die betreffende Station bestimmte Information herausgreifen kann. Das hierdurch geschaffene
synchrone Datenübertragungssystem ermöglicht auch eine
rein digitale Signalübertragung, die von schwankender
Dämpfung auf dem Übertragungsweg völlig unabhängig ist.
Somit eignet sich die Anordnung nach der Erfindung insbesondere für die Ausführung mit optischen Signalkabeln,
d. h. Lichtleitern mit biegsamen Glasfasern als Übertragungsleitung, wodurch ein besonders hohes Maß von
Störungssicherheit zu erreichen ist. Dies ist insbesondere von Vorteil bei der Anwendung der Anordnung im
Bergbau unter Tage, wo die benachbarte Verlegung von
Signal- und Starkstromkabeln kaum zu vermeiden ist.
Ähnliches gilt für Mittel- und Hochspannungs-Schaltanlagen, wo Signalleitungen starken magnetischen und
elektrischen Feldern ausgesetzt sein können.

Ein nach anfänglicher Synchronisierung völlig selbständiger Lauf der Taktgeneratoren aller Stationen ist durch
eine Quarzsteuerung zu erreichen. Somit enthält jede
Station als Frequenznormal einen Steuerquarz, der den
Adressenzähler weiterschaltet und Taktunterschiede
zwischen den Stationen durch die hohe Genauigkeit der
Schwingfrequenz auch ohne zusätzliche Synchronisierungsimpulse im Lauf einer Signalfolge verhindert.

Es empfiehlt sich, wie an sich bekannt, die Übertragungsleitung als Ringleitung auszuführen, weil dann in jeder
Station die Gesamtheit aller übertragenen Informationen
zur Verfügung steht und durch entsprechend adressierte
Ein- und Ausgabebausteine empfangen oder gesendet werden kann. Im Zusammenhang hiermit können in der Hauptstation gesonderte Taktgeneratoren für die Sende- und die Empfangsseite vorgesehen sein, um die Signallaufzeit auszugleichen.

Im Rahmen der Erfindung kann jede von der Hauptstation ausgehende Impulsfolge zu Beginn ein Rückstellbit und im weiteren Verlauf zwei Prüfbits enthalten, und den Taktgeneratoren der Nebenstationen kann jeweils ein Prüfkreis für das Vorhandensein der Prüfbits zugeordnet sein. Dies führt zu einer Selbstüberwachung der Anordnung auf ordnungsgemäße Funktion.

Um eine gute Signalunterscheidung zu erzielen, empfiehlt es sich, das Rückstellbit mit einer wesentlich längeren Zeitdauer als die Signalbits auszustatten.

Wie bereits erwähnt, ermöglicht die Anordnung nach der Erfindung eine rein digitale Signalübertragung. Diese kann vorzugsweise mit Rechteckimpulsen erfolgen.

Die Erfindung wird im folgenden anhand des in den Figuren dargestellten Ausführungsbeispieles näher erläutert.

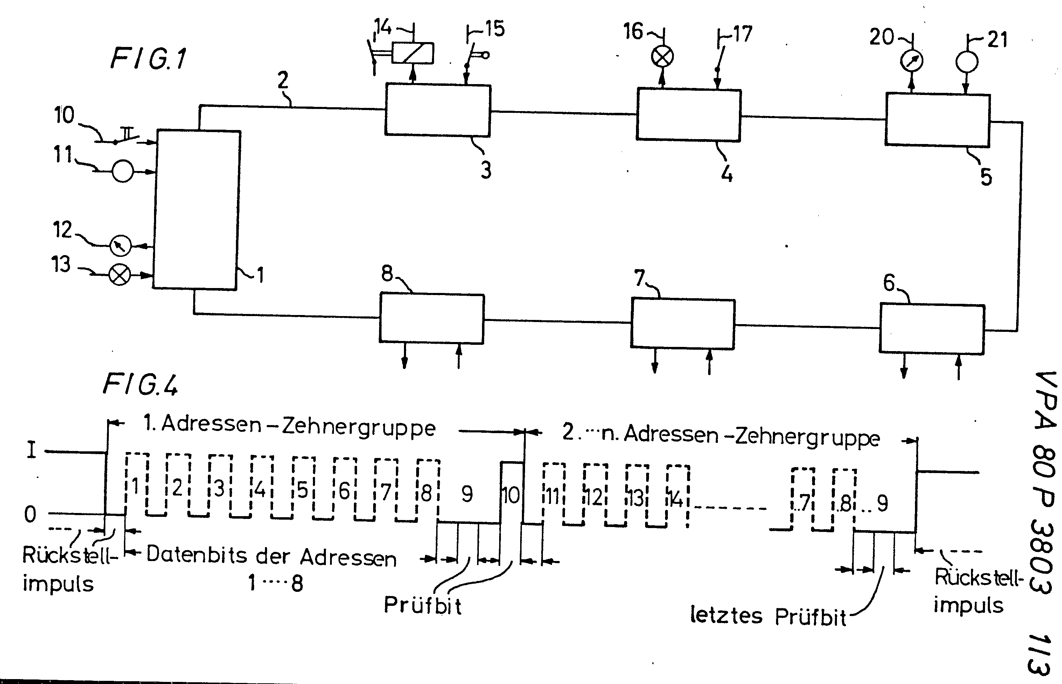

Die Fig. 1 zeigt schematisch eine Anordnung zur Signalübertragung mit einer Hauptstation und sechs Nebenstationen.

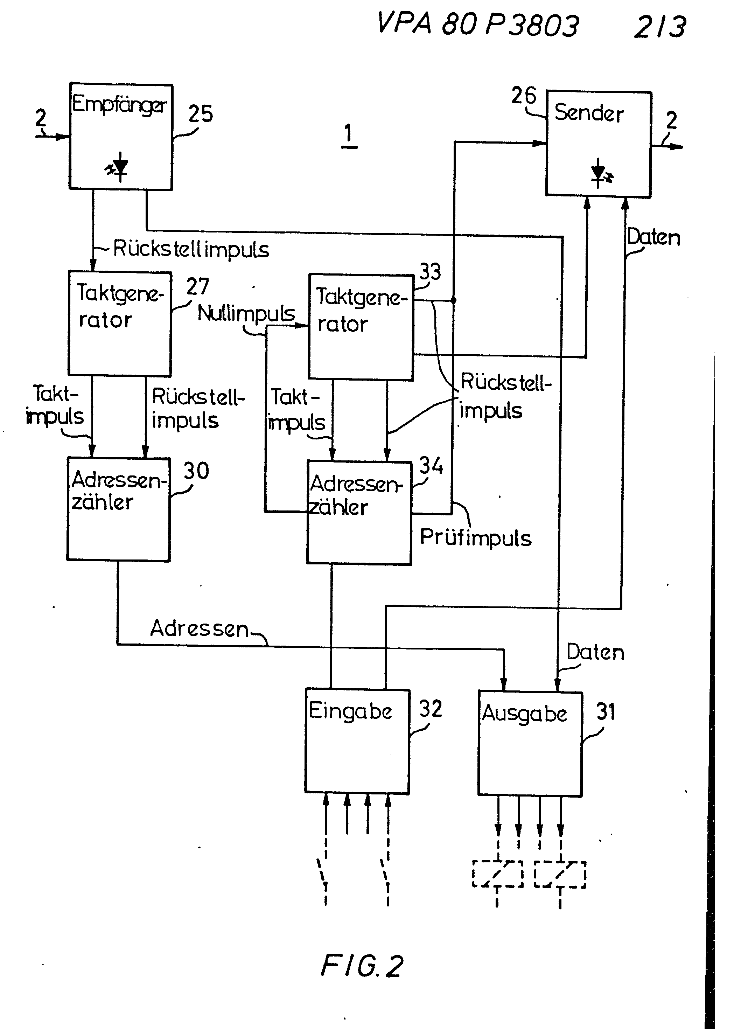

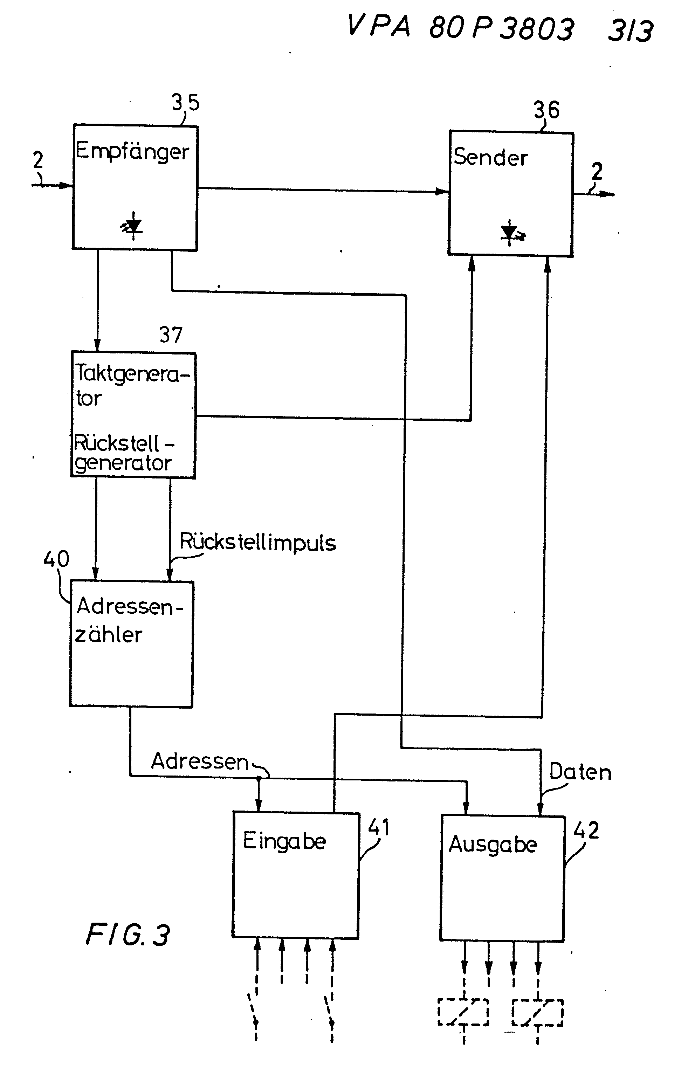

Der Aufbau der Hauptstation ist in der Fig. 2 als Blockschaltbild dargestellt. In gleicher Darstellungsweise ist eine Nebenstation in der Fig. 3 gezeigt.

Die bei der Signalübertragung auftretenden Impulsfolgen sind in der Fig. 4 veranschaulicht.

Die in der Fig. 1 dargestellte Anordnung umfaßt eine Hauptstation 1, die über eine Ringleitung 2 mit in die Ringleitung eingefügten, insgesamt sechs Nebenstationen 3, 4, 5, 6, 7 und 8 verbunden ist. Die Stationen sind schematisch als Blöcke dargestellt und zum Verständnis ihrer Funktionen mit Schaltsymbolen versehen. Insbesondere kennzeichnet der Tastschalter 10 der Hauptstation 1 Steuerbefehle, die über die Hauptstation einer oder mehreren Nebenstationen zu übermitteln sind. Ein weiterer Eingang 11 ist für unterschiedliche Steuergrößen vorgesehen, die gleichfalls einzelnen oder allen Nebenstationen zu übermitteln sind. An einem ersten Ausgang 12 erscheinen Meßwerte, die von den Nebenstationen an die Hauptstation gemeldet werden. Ein weiterer Ausgang 13 dient zur Erfassung von Meldungen der Nebenstationen, z. B. Rückmeldungen über die Ausführung von Steuerbefehlen, die über den Eingang 10 abgegeben wurden.

Die Nebenstationen sind gleichfalls mit wenigstens je einem Eingang und einem Ausgang für Befehle, Meldungen, Analog-Digitalwerte usw. versehen. Beispielsweise ist die Nebenstation 3 mit einem Ausgang 14 für Befehle ausgerüstet, die beispielsweise zum Ein- und Ausschalten von Maschinenanlagen dienen. Meldungen aus demselben Bereich können über den Eingang 15 an die Hauptstation 1 übermittelt werden. Die Nebenstation 4 besitzt einen Ausgang 16 für Meldungen, um z. B. einer dort befindlichen Bedienungsperson die Schaltstellung oder den sonstigen Betriebszustand einer an anderer Stelle befindlichen Einrichtung mitzuteilen. Ein Eingang 17 dient zur Übermittlung von Rückmeldesignalen an die Hauptstation 1. Die Nebenstation 5 ist mit einem Ausgang 20 und einem Eingang 21 für Analoganzeigen und Analogmeßwerte versehen, die in digitaler Form über die Ringleitung 2 zu der Nebenstation 5 übertragen oder von dieser an die Hauptstation 1 oder andere Nebenstationen weitergeleitet werden.

Die weiteren Nebenstationen 6, 7 und 8 können in sinngemäß der gleichen Weise mit Eingängen und Ausgängen für Meßwerte, Steuerbefehle u. ä. Signale versehen sein, ohne daß dies in der Fig. 1 im einzelnen dargestellt ist. Die gesamte Anordnung kann beispielsweise dazu dienen, in einem unter Tage befindlichen Bergbaubetrieb sämtliche anfallenden Steuerbefehle und Rückmeldesignale sowie alle Meßwerte von Strömen, Spannungen, Drücken, Temperaturen, Gaskonzentrationen u. ä. im Rahmen eines integrierten Datenübermittlungs- und -erfassungssystems zu übertragen. Ohne prinzipiellen Unterschied ist die gleiche Anordnung verwendbar, um z. B. sämtliche Steuerbefehle, Rückmeldungen und sonstigen Signale in einer größeren elektrischen Schaltanlage, z. B. einer Umspannstation, aufzunehmen.

Der grundsätzliche Aufbau der Hauptstation ist als Blockschaltbild in der Fig. 2 gezeigt. Die Hauptstation 1 besitzt einen Empfänger 25 sowie einen Sender 26, die beide in Verbindung mit den Enden der Ringleitung 2 stehen. Entsprechend der bevorzugten Ausführung der Ringleitung 2 als Lichtwellenleiter sind der Empfänger 25 und der Sender 26 mit einem Schaltsymbol für einen elektronischen Lichtempfänger bzw. einen Lichtemitter versehen. Ein Taktgenerator 27 bestimmt den Zeitablauf des nach Adressen geordneten Empfangs von Informationen. Dem Taktgenerator 27 zugeordnet ist ein Generator für Rückstellimpulse, die zusammen mit den Taktimpulsen einem Adressenzähler 30 der Empfangsseite zugeführt werden. Dieser liefert die Adressen in zeitlicher Folge an einen Ausgabebaustein 31, der sie mit den von dem Empfänger 25 gelieferten Daten in auswertbarer Form bereitstellt.

Der Sender 26 erhält Daten bzw. Informationen aus einem Eingabebaustein 32 und wird zugleich durch einen weiteren Taktgenerator 33 und einen Adressenzähler 34 gesteuert. Wie durch Pfeile in der Fig. 2 angegeben ist, stehen diese Geräte miteinander zum Austausch von Takt- und Rückstellimpulsen in Verbindung. Der Adressenzähler 34 liefert ferner die Prüfbits an den Sender 26.

Die Besonderheit der Hauptstation sind somit getrennte Taktgeneratoren und Adressenzähler für die Empfangs- und die Sendeseite und eine Verbindung des Senders und des Empfängers nur mit den Enden der Übertragungsleitung, d. h. das Fehlen einer direkten Verbindung des Empfängers mit dem Sender. Die Hauptstation ist daher in dieser Form unabhängig von einer Laufzeitdifferenz zwischen Sende- und Empfangsseite und kann daher in Ringleitungen ganz unterschiedlicher Länge eingesetzt werden, die z.B. bis 50 km betragen kann.

Die Nebenstationen sind mit prinzipiell den gleichen Bausteinen ausgerüstet, wie bei einem Vergleich der Fig. 3 mit der Fig. 2 ersichtlich ist. Demgemäß enthält jede Nebenstation einen Empfänger 35 und einen Sender 36, die beide mit der Ringleitung 2, jedoch auch direkt miteinander in Verbindung stehen. Da das Problem einer Laufzeitdifferenz nicht besteht, sind nur ein Taktgenerator 37 und ein Adressenzähler 40 vorhanden, die in der gleichen Weise wie in der Hauptstation 1 arbeiten. Ferner besitzt jede Nebenstation einen Eingabebaustein 41 und einen Ausgabebaustein 42 für Befehle, Meßwerte usw.

In der Fig. 4 ist der Aufbau der zur Signalübertragung über den Lichtleiter 2 vorgesehenen Impulsfolgen dargestellt. Jede Impulsfolge besteht aus mehreren Zehnergruppen, von denen in der Fig. 4 die erste sowie ein Teil der folgenden und ein Teil der letzten gezeigt ist. Jede Zehnergruppe besteht aus zehn möglichen Rechteckimpulsen mit einem Tastverhältnis 1 : 1. Ausgehend von dem positiven Rückstellimpuls beginnt die erste Zehnergruppe mit den Datenbits der Adressen 1 bis 8. Der neunte Schritt ist ein Prüfbit zur Übertragungssicherung, das

entsprechend seiner Funktion den Wert 0 erhält. Das zehnte Bit hat den Pegel I und dient ebenfalls als Prüfbit.

Die folgende Zehnergruppe hat einen der ersten Zehnergruppe entsprechenden Aufbau. Es fehlt jedoch der Rückstellimpuls, weil dieser nur einmal zu Beginn einer Folge von Zehnergruppen benötigt wird, um die Taktgeneratoren aller Stationen in Gang zu setzen. Dagegen schließt sich an die letzte Zehnergruppe wieder ein Rückstellimpuls an. Damit kehren die von den Taktgeneratoren gesteuerten Adressenzähler von der höchsten Adresse zur Adresse 0 zurück und beginnen erneut mit der beschriebenen Impulsfolge.

Die beschriebene Anordnung wirkt in folgender Weise: Soll beispielsweise von einer beliebigen Station "A" zu einer anderen Station "B" ein Steuerbefehl übertragen werden, so wird von der Station "A" beim Adressenzählerstand "n" auf die Übertragungsleitung ein I-Impuls gegeben und von der Station "B" beim gleichen Zählerstand ("n") ausgelesen und dem der Adresse zugeordneten Ausgang übergeben. An jedem Taktgenerator wird außerdem geprüft, ob beide Prüfbits (der neunte und zehnte Schritt) jeder Zehnergruppe den ihnen zukommenden Wert enthalten. Diese Prüfbits dienen als Anzeichen für den ordnungsgemäßen Ablauf der Datenübertragung. Wird eine Abweichung festgestellt, so wird dies als Anzeichen einer Störung gewertet, die an der betreffenden Station zur Anzeige gebracht wird und zugleich zur Sperrung der betreffenden Station für den Datenaustausch herangezogen werden kann.

Wie man erkennt, ermöglicht die beschriebene Anordnung die Versorgung einer großen Anzahl von Stationen mit zahlreichen Informationen, wobei der autonome Lauf der Taktgeneratoren eine Erfassung der Signale unabhängig von einer unvermeidlichen Dämpfung erlaubt. Als Übertragungsleitung sind daher die besonders störsicheren Lichtwellenleiter einsetzbar.

Als Anwendungsgebiete der beschriebenen Anordnung wurden bereits die Befehls- und Meßwertübertragung in Anlagen des Untertagebergbaus und der elektrischen Energieversorgung genannt. Da sich die Ein- und Ausgabeadressen frei wählen lassen, können auch freiprogrammierbare Steuerungen aufgebaut werden. "Oder"-Verknüpfungen sind realisierbar, indem mehrere Funktionsgruppen, die sich in verschiedenen Stationen befinden, auf eine Adresse arbeiten. Auch "Und"-Verknüpfungen sind erzielbar, indem eine Reihenschaltung von Funktionsgruppen durch die Festlegung ihrer Eingangs- und Ausgangsadresse verwendet wird. Die Eingangsadresse einer Funktionsgruppe ist dann gleich der Ausgangsadresse der vorangegangenen Funktionsgruppe. Bei Erfüllung der "Und"-Bedingung wird durch die Funktionsgruppe das Signal von der Eingangsadresse auf die Ausgangsadresse durchgeschaltet.

Während vorstehend besonders der Anwendungsfall der Datenübertragung über lange Strecken betrachtet wurde, sei noch erwähnt, daß die neue Anordnung auch innerhalb eines komplexen Gerätes eingesetzt werden kann. Hier vermag sie die umfangreiche Verdrahtung zwischen den einzelnen Funktionsgruppen, Modulen und Flachbaugruppen zu ersetzen und zugleich eine funktionelle Verknüpfung nach Art der freien Programmierung zu erzielen.

7 Ansprüche
4 Figuren

Patentansprüche

1. Anordnung zur Signalübertragung nach dem Zeitmultiplex-System mit einer Anzahl von Signalgeber und Signalempfänger enthaltenden Stationen, die miteinander in Signalaustausch treten können, d a d u r c h   g e -k e n n z e i c h n e t ,  daß die Stationen (1, 3 bis 8) einen Adressenzähler sowie einen diesen steuernden Taktgenerator besitzen, wobei die Taktgeneratoren von Nebenstationen durch den Taktgenerator einer Hauptstation in Lauf setzbar und synchronisierbar sind.

2. Anordnung zur Signalübertragung nach Anspruch 1, d a d u r c h   g e k e n n z e i c h n e t ,  daß die Taktgeneratoren aller Stationen (1, 3 bis 8) quarzgesteuert autonom arbeiten.

3. Anordnung zur Signalübertragung nach Anspruch 1, d a d u r c h   g e k e n n z e i c h n e t ,  daß zum Ausgleich der Signallaufzeit in einer zu einem Ring geschlossenen Übertragungsleitung (2) die Hauptstation (1) gesonderte Taktgeneratoren und Adressenzähler für die Sende- und die Empfangsseite besitzt.

4. Anordnung zur Signalübertragung nach Anspruch 1, d a d u r c h   g e k e n n z e i c h n e t ,  daß jede von der Hauptstation (1) ausgehende Impulsfolge zu Beginn ein Rückstellbit und im weiteren Verlauf zwei Prüfbits enthält und daß den Taktgeneratoren der Nebenstationen (3 bis 8) jeweils ein Prüfkreis für das Vorhandensein der Prüfbits zugeordnet ist.

5. Anordnung zur Signalübertragung nach Anspruch 4, d a d u r c h   g e k e n n z e i c h n e t ,  daß das Rückstellbit wesentlich länger als ein Signalbit ist.

6. Anordnung zur Signalübertragung nach Anspruch 1,
d a d u r c h   g e k e n n z e i c h n e t ,   daß die
Signal Rechtecksignale sind.


7. Anordnung zur Signalübertragung nach Anspruch 1,
d a d u r c h   g e k e n n z e i c h n e t ,   daß die
zwischen den Stationen (1, 3 bis 8) befindliche Übertragungsleitung (2) als Lichtleiter ausgebildet ist
und alle Stationen (1, 3 bis 8) Umsetzer zur Umwandlung
von Signalen in Lichtimpulse aufweisen.

## FIG.1

## FIG.4

1. Adressen–Zehnergruppe

2. ··· n. Adressen–Zehnergruppe

I

0

Rückstell-impuls

Datenbits der Adressen
1 ···· 8

Prüfbit

letztes Prüfbit

Rückstell-impuls

VPA 80 P 3803 113

0055688

FIG.2

0055688

VPA 80 P 3803 313

FIG. 3

**Europäisches Patentamt**

## EUROPÄISCHER RECHERCHENBERICHT

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| X | GB - A - 1 507 609 (CANADIAN RGL ELECTRONICS) | | G 08 C 15/12 |
| | * Seite 2, Zeile 25 bis Seite 4, Zeile 25; Figuren 1,2 * | 1,2,6 | |
| | -- | | |
| X | GB - A - 1 310 679 (THE MARCONI COMPANY) | | |
| | * Ganzes Dokument * | 1,2,6 | |
| | -- | | |
| X | DE - A - 2 154 696 (ROBERT BOSCH) | | |
| | * Patentanspruch 1; Figuren 1,2 * | 1 | RECHERCHIERTE SACHGEBIETE (Int. Cl.³) |
| | -- | | |
| A | FR - A - 2 365 250 (HEWLETT-PACKARD FRANCE) | | G 08 C 15/12<br>H 04 J 3/06<br>H 04 L 11/16 |
| | * Seite 4, Zeile 17 bis Seite 6, Zeile 11; Figuren 1,2 * | 1,6 | |
| | -- | | |
| A | DE - A - 2 435 579 (PLESSEY HANDEL UND INVESTMENTS) | | |
| | * Seite 3, Zeile 10 bis Seite 6, Zeile 20; Figuren 1 bis 3 * | 1,3,6 | |
| | -- | | KATEGORIE DER GENANNTEN DOKUMENTE |
| A | WO - A - 79/00351 (CONTROL JUNCTIONS) | | |
| | * Seite 2, Zeile 30 bis Seite 7, Zeile 15; Figur 1 * | 1 | |
| | -- | | |
| | ./. | | |

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-03-1982 | WANZEELE |

EPA form 1503.1 06.78

| Europäisches Patentamt | EUROPÄISCHER RECHERCHENBERICHT |
|---|---|

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| A | DE - A - 2 412 959 (TAMTRON OY) <br> * Patentanspruch 1; Figur 2 * <br><br> ---- | 1 |

KLASSIFIKATION DER ANMELDUNG (Int. Cl.³)

RECHERCHIERTE SACHGEBIETE (Int. Cl.³)